# EUROPÄISCHE PATENTSCHRIFT

(11) **EP 0 761 375 B1**
(45) Veröffentlichungstag und Bekanntmachung des Hinweises auf die Patenterteilung: **03.11.1999**
(21) Anmeldenummer: 96113353.5
(22) Anmeldetag: 21.08.1996
(51) Int. Cl.: B23K 26/00, B23K 31/02, B62D 31/02

(54) **Verfahren zur Erzielung einer dekorativen Aussenfläche bei der Herstellung gerippeversteifter Blechbauteile, insbesondere bei der Seitenwandherstellung von Schienenfahrzeugen**
Process for obtaining a decorative outer surface during the fabrication of framework stiffened plate elements, particularly during the fabrication of railway carriage side walls
Procédé d'obtention d'une surface décorative extérieure lors de la réalisation d'ensemble en tôles raidies par adjonction de profilés, en particulier lors de la réalisation de flancs de véhicules ferroviaires

(30) Priorität: 29.08.1995 DE 19531726
(43) Veröffentlichungstag der Anmeldung: 12.03.1997
(73) Patentinhaber: DWA Deutsche Waggonbau GmbH, 12526 Berlin (DE)
(72) Erfinder: Keitel, Steffen, Dr.-Ing., 06128 Halle (DE); Hauser, Frank, 06114 Halle (DE); Müller, Jens, 06128 Halle (DE); Wölflick, Manfred, 06130 Halle (DE); Haring, Lothar, 06188 Niemberg (DE); Diebel, Ernst-Peter, 06120 Halle (DE)

(56) Entgegenhaltungen:
- EP-A- 0 379 310
- DE-A- 2 837 061
- DE-A- 4 118 791
- US-A- 4 223 201
- US-A- 5 131 710
- PATENT ABSTRACTS OF JAPAN vol. 11, no. 74 (M-568), 6.März 1987 & JP-A-61 229489 (MITSUBISHI HEAVY IND LTD), 13.Oktober 1986,

## Beschreibung

Die Erfindung betrifft ein Verfahren zur Erzielung einer dekorativen Außenfläche bei der Herstellung gerippeversteifter Blechbauteile, wobei ein aus Z- oder winkelförmigen Versteifungsprofilen mit einer Profilstärke von 1 mm bis 3 mm bestehendes Gerippe auf die Innenseite der eine Blechstärke von ebenfalls 1 mm bis 3 mm aufweisenden Außenbeblechung aufgelegt und mit dieser unter Verwendung eines Festkörper- oder CO₂-Lasers mittels Überlapp-oder Parallelschweißungen beliebiger Nahtform durch den auf der Außenbeblechung aufliegenden Schenkel des Versteifungsprofils hindurch und etwa 1/3 bis 2/3 in die Blechstärke der Außenbeblechung hinein verbunden wird, und es ist insbesondere vorteilhaft bei der Herstellung der Seitenwände von Schienenfahrzeugen anwendbar.

Dem Fachmann auf dem Gebiet der Schweißtechnik ist es allgemein bekannt, daß sich die Herstellung gerippeversteifter Blechbauteile, zumindest wenn diese durch Verschweißen der Gerippeteile mit dem Außenblech mittels herkömmlicher Schweißverfahren hergestellt werden, dahingehend problematisch gestaltet, daß sich die Schweißverbindungen auf der Außenseite des Blechbauteils durch Anlauffarben und/oder durch Schrumpfmarkierungen beziehungsweise durch lokale Flächenverformungen in unerwünschter Weise abzeichnen. Insbesondere bei großflächigen gerippeversteiften Blechbauteilen, wie bei den Seitenwänden von Schienenfahrzeugen, bei denen ein aus Z-oder winkelförmigen Versteifungsprofilen mit einer Profilstärke von 1 mm bis 3 mm bestehendes Gerippe auf die Innenseite der eine Blechstärke von ebenfalls 1 mm bis 3 mm aufweisenden Außenbeblechung aufgelegt und mit dieser durch wechselseitige Kehlnaht-Schrittschweißungen an dem auf der Außenbeblechung aufliegenden Schenkel des Versteifungsprofils verbunden wird, kann somit eine ebene Seitenwandoberfläche für ein ansprechendes äußeres Aussehen des Schienenfahrzeuges nicht erreicht werden. Um deshalb ein relativ zufriedenstellendes Ergebnis in dieser Hinsicht erzielen zu können, ist es in der Praxis notwendig, die Unebenheiten in der Seitenwandoberfläche durch Richten, Schleifen und/oder Verspachteln nachzubessern. Diese Nachbesserungsarbeiten sind jedoch technisch und ökonomisch sehr aufwendig und haben dahingehend ihre technischen Grenzen, daß die Unebenheiten in der Seitenwand, zumindest nach der Lackierung des Schienenfahrzeuges, durch Lichtreflexionen meistens dennoch ohne weiteres zu erkennen sind.

Mit der Anwendung des ebenfalls bekannten und an sich sehr vorteilhaften Punktschweißverfahrens, welches sich gemäß ETR (26), 3-1977, S. 123 - 130 insbesondere für die Herstellung von Schienenfahrzeugen in Leichtbauweise eignet, kann zwar der Umfang der genannten Richt- und Schleifnacharbeiten verringert werden, aber auch hiermit ist die Herstellung ansprechend dekorativer Außenflächen an den Seitenwänden von Schienenfahrzeugen qualitativ noch nicht zufriedenstellend, da auch hier eine verfahrensabhängige Unterwölbung der Außenfläche der Außenbeblechung unter Einwirkung der Elektrodenkraft entsteht.
Durch die DE-PS 28 37 061 wurde deshalb eine Schweißverbindung für ein metallisches Rahmenteil und eine dünne metallische Außenhaut vorgeschlagen, bei welcher der mit der Außenhaut zu verbindende Schenkel des U-förmigen Rahmenteiles an seiner Außenseite mehrere vorstehende, die Innenfläche der Außenhaut berührende Rippen sowie zwei seitliche Flansche aufweist, die ebenfalls über die Außenseite des zu verbindenden Schenkels des Rahmenteiles vorstehen und die Innenfläche der Außenhaut berühren. Diese Flansche haben im Vergleich zum Schenkel des Rähmenteiles eine verminderte Dicke, so daß sie unter der Wärmeentwicklung beim Schweißen leicht verformt werden können. Die Schweißverbindung wird dann im Bereich der Flansche derart erstellt, daß die Flansche anstelle der Außenhaut eventuell auftretende Verformungen durch Winkelschrumpfungen und Wärmespannungen aufnehmen können. Eine solche Schweißverbindung hat jedoch den Nachteil, daß für deren Realisierung ein Rahmenteil mit einem Spezialprofil notwendig ist, welches weder eine genormte noch eine handelsübliche Form aufweist und somit für den speziellen Verwendungszweck erst hergestellt werden muß. Da die Herstellungskosten für solch ein Spezialprofil jedoch relativ hoch sind, wirkt sich deren Verwendung auch negativ auf die Herstellungskosten des gesamten Schienenfahrzeuges aus. Darüber hinaus ist es auch mit einem solchen speziellen Rahmenteil nicht auszuschließen, daß sich die Schweißverbindungen zwischen den Flanschen und der Außenhaut äußerlich zumindest durch Anlauffarben und/oder durch Schrumpfmarkierungen abzeichnen. Ebenfalls allgemein bekannt sind dem Fachmann die geläufigsten Laserstrahl-Schweißverfahren sowie die vielfältigen Einsatzmöglichkeiten und Vorteile dieser Verfahren. Aus der Vielzahl von Veröffentlichungen zu dieser noch relativ neuen Technologie wird an dieser Stelle nur auf die DE-OS 42 40 824 als Beispiel verwiesen, in welcher auf die besondere Eignung des Laserstrahlschweißens für Überlappschweißungen zwischen gleichstarken Materialien hingewiesen wird. Genaue technische Parameter zum Laserstrahlschweißen verschiedenster Verbindungen sind darüber hinaus der DE-PS 41 18 791 entnehmbar, in welcher ein Verfahren zum Schweißen von Aluminium und dessen Legierungen unter Verwendung eines Festkörper- oder CO₂-Lasers beschrieben wird. Dabei wird die Schweißung mit einer Strahlleistung der Laserstrahlen zwischen 1500 Watt und 5000 Watt und einer Schweißgeschwindigkeit zwischen 0 m/min und 10 m/min bei einer Blechdicke zwischen 1,5 mm und 3 mm durchgeführt.
Mögliche Gestaltungselemente und Gestaltungsparameter von lasergeschweißten Verbindungen werden dagegen ausführlich in 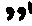 Schweißen und Schneiden" 46 (1994), Heft 5, S. 236 - 242 gezeigt. Insbesondere die für die Seitenwandherstellung im Schienenfahrzeugbau Frage kommenden Nahtgestaltungen für Überlappschweißungen, wie das Schweißen der Naht durch das eine Bauteil hindurch und etwa 1/3 bis 2/3 in die Blechstärke des anderen Bauteiles hinein in Form von linien-, ellipsen- oder wellenförmigen Schrittschweißungen oder in Form von Punktschweißungen, sind dieser Veröffentlichung entnehmbar.
Die bekannten laserstrahlgeschweißten Verbindungen haben sich bisher jedoch aufgrund des in jedem Fall entstehenden keilförmigen Nahtquerschnitts als ebenfalls ungeeignet zur Erzielung einer dekorativen Außenfläche bei der Herstellung von Schienenfahrzeug-Seitenwänden erwiesen, da mit den bekannten Parametern und Verfahrensbedingungen auch hierbei noch zu hohe Wärmespannungen auftreten und somit ebenfalls unerwünschte Schrumpfmarkierungen und Anlauffarben an der Außenseite der Außenbeblechung sichtbar werden. Die Erfindung verfolgt somit das Ziel, ein Verfahren zur Herstellung gerippeversteifter Blech
bauteile zu entwickeln, mit dem die genannten Mängel des Standes der Technik beseitigt werden.

Als Aufgabe liegt der Erfindung die Konzipierung eines kostengünstigen Verfahren zur Erzielung einer dekorativen Außenfläche bei der Herstellung gerippeversteifter Blechbauteile, insbesondere bei der Seitenwandherstellung von Schienenfahrzeugen, zugrunde, mit welchem die Winkelschrumpfungen an der Schweißverbindung sowie die Wärmespannungen, Nahtmarkierungen und Anlauffarben im Sichtbereich der Außenbeblechung auf ein Minimum reduzierbar sind.
Die Aufgabe wird mit einem gattungsgemäßen Verfahren nach dem Oberbegriff des Anspruchs 1 unter Verwendung eines Festkörper- oder CO₂-Lasers derart gelöst, daß die Versteifungsprofile und die Außenbeblechung mit einer gleich oder geringfügig schmaler als die Schweißnahtbreite ausgebildeten Bindezonenbreite von 0,6 mm bis 1,2 mm sowie mit annähernd parallel zueinander angeordneten Nahtflanken miteinander laserverschweißt werden, wobei eine Gesamteinschweißtiefe zwischen 1,5 mm und 5 mm und eine Laseroptik-Brennweite zwischen 80 mm und 300 mm eingestellt und die minimale Schweißgeschwindigkeit auf 1 m/min bei einer Strahlleistung der Laserstrahlen von 1000 Watt bis 5000 Watt festgelegt wird.
Als zweckmäßige Ausgestaltung des erfindungsgemäßen Verfahrens ist die Stahlgüte der Versteifungsprofile dabei bevorzugt gleich oder niedriger als die der Außenbeblechung und zumindest die zu verschweißenden Schenkel der Versteifungsprofile weisen gegenüber der Außenbeblechung die gleiche oder eine geringere Materialstärke auf.
Der Vorteil des erfindungsgemäßen Verfahrens gegenüber dem Stand der Technik ist, daß es mit den angegebenen Parametern und der damit verbundenen Schweißnahtquerschnittsgestaltung möglich ist, das weitestgehend automatisierte Laserstrahlschweißen mit geringem Aufwand und ohne zusätzliche Regelprozesse auch bei der Herstellung großflächiger gerippeversteifter Bauteile, wie Seitenwände, Dachkonstruktionen und ähnliche Verbundbauteile von Schienenfahrzeugen, anzuwenden, wobei mit den angegebenen Materialstärken und Stahlgüten immer eine Bindezonenbreite im angegebenen Bereich sowie eine Schweißnaht mit annähernd parallelen Nahtflanken gewährleistet ist und somit nur minimale Winkelschrumpfüngen, Wärmespannungen und somit Nahtmarkierungen an der Außenseite der Schweißverbindung auftreten. Dadurch und aufgrund dessen, daß nur 1/3 bis 2/3 in die Materialstärke der Außenbeblechung hineingeschweißt wird, werden störende Schrumpfmarkierungen und Anlauffarben an der Außenseite der Außenbeblechung vermieden, so daß diese auch nach deren Lackierung noch eine zufriedenstellend dekorative Außenfläche aufweist. Darüber hinaus ist durch die Anwendung des Laserstrahl-Überlappschweißens eine Verbesserung der Fertigungsqualität des Schienenfahrzeuges möglich, und der Aufwand für die bisher notwendigen Nacharbeiten an der Seitenwand wird auf ein Minimum reduziert.
Ein Ausführungsbeispiel der Erfindung wird nachfolgend anhand der dazugehörigen Zeichnungen ausführlich erläutert. Die Zeichnungen zeigen dabei in
Fig. 1 - eine Sektion einer Schienenfahrzeug-Seitenwand im Rohbau
Fig. 2 - den Schnitt A-A nach Fig. 1
Fig. 3 - die Einzelheit B nach Fig. 2 in perspektivischer Ansicht

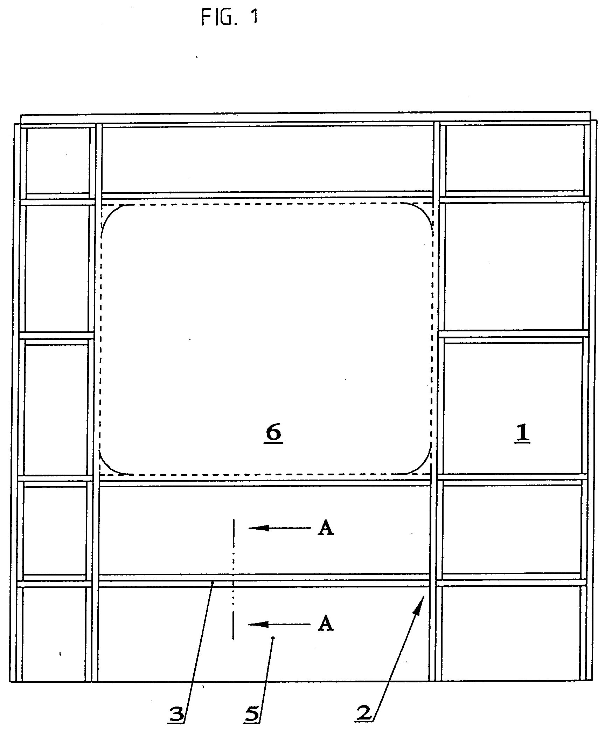

In Fig. 1 ist deutlich ein gerippeversteiftes Bauteil in Form einer Seitenwandsektion 1 für Schienenfahrzeuge zu sehen, welche aus einem aus mehreren Versteitungsprofilen 3 unterschiedlicher Länge gebildeten Gerippe 2 und aus der mit einem Fensterausschnitt 6 ausgebildeten Außenbeblechung 5 besteht.

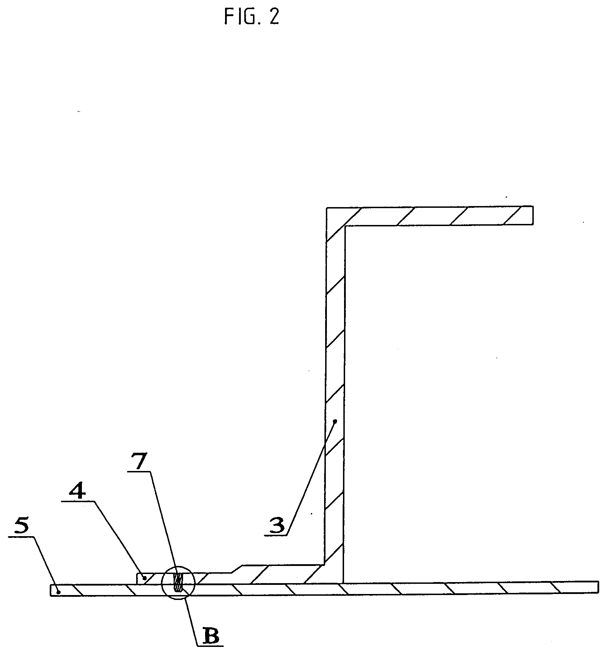

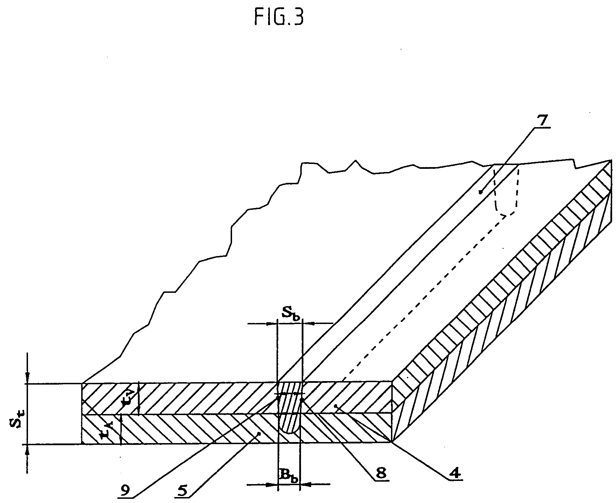

Die Herstellung einer solchen Seitenwandsektion 1 erfolgt dabei derart, daß die, wie aus Fig. 2 ersichtlich, bevorzugt einen Z-förmigen Profilquerschnitt mit einer Profilstärke von 1 mm bis 3 mm aufweisenden Versteifungsprofile 3 entweder als vorgefertigtes Gerippe 2 oder als Einzelprofile zunächst auf die Innenseite der ebenfalls eine Blechstärke von 1 mm bis 3 mm aufweisenden Außenbeblechung 5 ohne dazwischen befindlichen Luftspalt aufgelegt werden und anschließend mit dieser unter Verwendung eines Festkörper- oder CO₂-Lasers mittels Parallelschweißungen beliebiger Nähtform verbunden werden. Dabei wird in bekannter Weise durch den auf der Außenbeblechung 5 aufliegenden Schenkel 4 des Versteifungsprofils 3 hindurch und etwa 1/3 bis 2/3 in die Blechstärke der Außenbeblechung 5 hineingeschweißt. Bei der Auswahl, die Versteifungsprofile 3 als vorgefertigtes Gerippe oder als Einzelprofile mit der Außenbeblechung 5 zu verschweißen, hat sich in der Praxis das Verschweißen als vorgefertigtes Gerippe als vorteilhafter erwiesen, da hierbei der fertigungstechnische Aufwand am geringsten und die Qualität der hergestellten Seitenwand 1 am höchsten ist. Zwar kann mit dem Einzelprofilschweißen die durch Fertigungstoleranzen oder durch Versatz bedingte Spaltbildung an den Knotenpunkten der Versteifungsprofile 3 vermieden werden, aber der durch das anschließende Verschweißen der Knotenpunkte verursachte Wärmeeinzug in die Außenbeblechung 5 wirkt sich wiederum nachteilig auf deren Ebenheit aus. Ebenso ist es hinsichtlich der Vermeidung von Anlauffarben und von Bauteilverzug an der Außenseite der Außenbeblechung 5 von Vorteil, die Schweißnaht 7 als unterbrochene Naht beziehungsweise als lineare Schrittschweißung auszubilden, da mit dieser Nahtform die geringste Wärme in die Außenbeblechung 5 eingetragen wird.
Eine weitere Verringerung des Wärmeeinzuges beziehungsweise der damit verbundenen Wärmespannungen und Winkelschrumpfungen an der Schweißverbindung wird erfindungsgemäß dadurch erreicht, daß die Versteifungsprofile 3 und die Außenbeblechung 5 mit einer gleich oder geringfügig schmaler als die Schweißnahtbreite S_{b} ausgebildeten Bindezonenbreite B_{b} von 0,6 mm bis 1,2 mm sowie annähernd parallel zueinander angeordneten Nähtflanken 8; 9 in der in Fig. 3 abgebildeten Art miteinander verschweißt werden. Bei den angegebenen Materialstärken t_{V} und t_{A} der Versteifungsprofile 3 und der Außenbeblechung 5 ist dabei eine Gesamteinschweißtiefe Sₜ zwischen 1,5 mm und 5 mm einzuhalten, während die Brennweite der Laseroptik zwischen 80 mm und 300 mm einzustellen ist. Hinsichtlich der Wirtschaftlichkeit des gesamten Schweißvorganges hat sich darüber hinaus eine minimale Schweißgeschwindigkeit von 1 m/min bei einer Strahlleistung der Laserstrahlen von 1000 Watt bis 5000 Watt als am günstigsten erwiesen.

Wird das erfindungsgemäße Verfahren demzufolge für eine Laser-Parallelschweißung zwischen einem Versteifungsprofil 3 mit t_{V} = 1 mm Profilstärke und einer Außenbeblechung 5 mit t_{A} = 1 mm Blechstärke angewandt, ist eine Strahlleistung der Laserstrahlen von 1000 Watt und eine Laseroptikbrennweite von 80 mm bis 150 mm sowie eine Schweißgeschwindigkeit von 1 m/min zu wählen. Die Gesamteinschweißtiefe Sₜ wird dann maximal 1,5 mm und die Bindezonenbreite nicht unter 0,6 mm betragen. Werden dagegen Versteifungsprofile 3 mit t_{V} = 3 mm und eine Außenbeblechung von t_{A} = 3 mm verwendet, wird eine Strahlleistung der Laserstrahlen von 5000 Watt und eine Laseroptikbrennweite von 150 mm bis 300 mm sowie eine Schweißgeschwindigkeit größer als 2 m/min gewählt. In diesem Fall beträgt die Gesamteinschweißtiefe Sₜ maximal 5 mm und die Bindezonenbreite nicht über 1,2 mm.
Zur Erreichung einer derart vorteilhaften Nahtgestaltung ist es jedoch in Ausgestaltung des erfindungsgemäßen Verfahrens von Vorteil, daß die Stahlgüte der Versteifüngsprofile 3 bevorzugt gleich oder niedriger als die der Außenbeblechung 5 ist. Als optimale Kombination wäre hierbei die Verwendung eines unlegierten Stahles für die Versteifungsprofile 3 und die Verwendung eines legierten Stahles für die Außenbeblechung 5 zu nennen. Ebenso wirkt es sich positiv auf die Qualität der Schweißnäht 7 aus, wenn zumindest die zu verschweißenden Schenkel 4 der Versteifungsprofile 3 die gleiche oder eine geringere Materialstärke t_{V}; t_{A} gegenüber der Außenbeblechung aufweisen. Fig. 2 zeigt dabei, wie dies mit einem geringfügig veränderten handelsüblichen Z-Profil ohne Einbußen in der Stabilität der Profile realisiert werden kann. Insbesondere bei handelsüblichen Profilen, die wegen ihrer relativ dünnen Profilstärke normalerweise nicht als Versteifungsprofile 3 einsetzbar sind, kann dies auch durch das Einbringen zusätzlicher Versteifungssicken in das Profil realisiert werden.

## Patentansprüche

1. Verfahren zur Erzielung einer dekorativen Außenfläche bei der Herstellung gerippeversteifter Blechbauteile, insbesondere bei der Seitenwandherstellung von Schienenfahrzeugen, wobei ein aus Z- oder winkelförmigen Versteifungsprofilen (3) mit einer Profilstärke von 1 mm bis 3 mm bestehendes Gerippe auf die Innenseite der ebenfalls eine Blechstärke von 1 mm bis 3 mm aufweisenden Außenbeblechung (5) ohne dazwischen befindlichen Luftspalt aufgelegt und mit diesem unter Verwendung eines Festkörper- oder CO₂ -Lasers mittels Überlapp-oder Parallelschweißungen beliebiger Nahtform durch den auf der Außenbeblechung aufliegenden Schenkel des Versteifungsprofils (3) hindurch und etwa 1/3 bis 2/3 in die Blechstärke der Außenbeblechung (5) hinein verbunden wird, dadurch **gekennzeichnet,** daß die Versteifungsprofile (3) und die Außenbeblechung (5) mit einer gleich oder geringfügig schmaler als die Schweißnahtbreite (S_{b}) ausgebildeten Bindezonenbreite (B_{b}) von 0,6 mm bis 1,2 mm sowie mit annähernd parallel zueinander angeordneten Nähtflanken (8; 9) miteinander verschweißt werden, wobei eine Gesamteinschweißtiefe (Sₜ) zwischen 1,5 mm und 5 mm und eine Laseroptik-Brennweite zwischen 80 mm und 300 mm eingestellt und die minimale Schweißgeschwindigkeit auf
1 m/min bei einer Strahlleistung der Laserstrahlen von 1000 bis 5000 Watt festgelegt wird.

2. Verfahren nach Anspruch 1, dadurch **gekennzeichnet,** daß die Stahlgüte der Versteifungsprofile (3) unter Ausnutzung der unterschiedlichen Wärmeleitfähigkeit verbunden mit unterschiedlicher Aufschmelzkonzentration bevorzugt niedriger oder gleich als die der Außenbeblechung (5) ist und zumindest die zu verschweißenden Schenkel (4) der Versteifungsprofile (3) die gleiche oder eine geringere Materialstärke (t_{V}; t_{A}) gegenüber der Außenbeblechung (5) aufweisen.

## Claims

1. Process for obtaining a decorative outer surface during the fabrication of framework-stiffened plate elements, particularly during the fabrication of railway carriage side walls, a framework made of Z-shaped or angular stiffening profiles (3) with a profile thickness of 1 mm to 3 mm being laid onto the inner side of the outer plating (5), likewise having a plate thickness of 1 mm to 3 mm, without an air gap in between, and joined thereto using a solid-state or CO₂ laser by means of lap or parallel welds of any form of seam through the leg of the stiffening profile (3) lying on the outer plating and about 1/3 to 2/3 of the way into the plate thickness of the outer plating (5), characterized in that the stiffening profiles (3) and the outer plating (5) are welded to each other with a binding zone width (B_{b}) which is equal to or slightly narrower than the welding seam width (S_{b}) of 0.6 mm to 1.2 mm and with almost parallel seam edges (8;9), a total welding depth (Sₜ) of between 1.5 mm and 5 mm and a laser optics focal length of between 80 mm and 300 mm being set and the minimum welding speed being fixed at 1 m/min for a beam power of the laser beams of 1000 to 5000 watts.

2. Process according to Claim 1, characterized in that, utilizing the different thermal conductivity associated with different fusing concentration, the quality of the steel of the stiffening profiles (3) is preferably lower than or equal to that of the outer plating (5), and at least the legs (4) to be welded of the stiffening profiles (3) have a material thickness (t_{V}; t_{A}) which is the same as or smaller than the outer plating (5).

## Revendications

1. Procédé pour l'obtention d'une surface extérieure décorative lors de la fabrication d'ensembles en tôle raidis par adjonction de profilés, en particulier lors de la fabrication de parois latérales de véhicules ferroviaires, dans lequel une ossature composée de profilés de raidissement en forme de Z ou de cornière (3) avec une épaisseur de profité de 1 mm à 3 mm est appliquée sur la face intérieure des tôles extérieures (5) présentant également une épaisseur de tôle de 1 mm à 3 mm, sans couche d'air interposée entre elles, et est assemblée à celles-ci en utilisant un laser à corps solide ou à CO₂, au moyen de soudures à recouvrement ou de soudures sur chant avec des cordons de forme quelconque traversant l'aile du profité de raidissement (3) appliquée sur les tôles extérieures et pénétrant d'environ 1/3 à 2/3 dans l'épaisseur de tôle des tôles extérieures (5), caractérisé en ce que les profilés de raidissement (3) et les tôles extérieures (5) sont soudés les uns aux autres avec une largeur de zone d'assemblage (B_{b}) de 0,6 mm à 1,2 mm égale à ou légèrement plus étroite que la largeur du cordon de soudure (S_{b}) ainsi qu'avec des flancs de cordon (8; 9) disposés à peu près parallèlement l'un à l'autre, une profondeur de pénétration totale (Sₜ) étant réglée entre 1,5 mm et 5 mm et une distance focale de l'optique du laser étant réglée entre 80 mm et 300 mm et la vitesse de soudage minimale étant fixée à 1 m/min pour une puissance de rayonnement des rayons laser de 1000 à 5000 watt.

2. Procédé suivant la revendication 1, caractérisé en ce que la nuance d'acier des profilés de raidissement (3) est, en utilisant la conductibilité calorifique différente couplée à une concentration de fusion différente, de préférence inférieure ou égale à celle des tôles extérieures (5), et en ce qu'au moins les ailes à souder (4) des profilés de raidissement (3) présentent une épaisseur de matière (tᵥ; t_{A}) égale ou inférieure à celle des tôles extérieures (5).
